# EUROPEAN PATENT APPLICATION

(11) **EP 3 901 879 A1**
(43) Date of publication of application: **27.10.2021**
(21) Application number: 19899802.3
(22) Date of filing: 18.12.2019
(51) Int. Cl.: G06Q 20/32, G06Q 20/38, G06Q 30/02

(54) **SYSTEM AND METHOD FOR PROVIDING SERVICE FOR RANDOM DISCOUNT IN REAL TIME BY USING MOBILE APP**

(30) Priority: 19.12.2018 KR 20180165345
(71) Applicant: Kang, Chan Go, Seoul 08515 (KR)
(72) Inventor: Kang, Chan Go, Seoul 08515 (KR)
(74) Representative: López Camba, Emilia
(86) International application number: PCT/KR2019/018023
(87) International publication number: WO 2020/130637

(57) **Abstract**

The present disclosure relates to a system and method for providing a real-time random discount service by using a mobile app, the system including: a seller terminal provided in an off-line shop operated by a seller; a purchaser terminal owned by a purchaser who authorizes payment for the purchase of a product; and a random discount service server including: a random discount app control unit for controlling to forcibly execute a random discount application by pushing an app activation signal to the purchaser terminal, to thereby display, on a display unit of the purchaser terminal, a random discount selection screen including a plurality of random discount selection buttons, wherein the random discount selection button has a winning probability inversely proportional to a discount rate, and to receive, from the purchaser, selection information on one of the plurality of random discount selection buttons; a random discount price setting unit for setting a random discount price to be offered to the purchaser, according to the winning probability and a discount price included in the selection information transmitted from the purchaser terminal; and a payment settlement unit for settling the payment according to the set random discount price.

## Description

### TECHNICAL FIELD

Exemplary embodiments of the present disclosure relate to a system and a method for providing a real-time random discount service by using a mobile app, and more particularly, to a system and a method for providing a real-time random discount service by using a mobile app that allows a purchaser to actively participate in a discount process during the process of receiving a real-time random discount service by using a mobile app provided in a terminal of the purchaser who visits an off-line store operated by a seller and purchases a product, thereby stimulating interests related to transactions and encouraging the purchaser to actively participate in the transactions in support of the purchaser.

### BACKGROUND ART

With the development of the Internet technology, e-commerce, that is, the online shopping market, is rapidly growing, and the range of online transactions is continuously expanding. Online shopping platforms can be largely divided into individual shopping malls, general merchandise shopping malls, and open markets, *etc.*

Among others, online shopping platforms are the largest in scale and are garnering most attention in recent years as an open market that provides a virtual space for online sales to a number of unspecified sellers. Instead of arranging a sales space for an operator seller who operates an open market, online shopping platforms receive fixed sales fees from the sellers.

From the perspective of open market operators and sellers selling their products in the open market, the core of business lies in marketing strategies to increase sales revenues. To this end, various marketing techniques are employed to maximize sales. However, the most commonly used marketing technique is to issue discount vouchers.

In the marketing event using discount vouchers, the seller usually pays for a loss of profits that has incurred due to discount, or the seller and the open market operator share the loss at a predetermined rate. Thus, in order to prevent setback in the earning rate, the event should be operated in a short term period. Furthermore, the discount amount should be appropriately regulated.

In this structure of event using discount vouchers, an unprecedented discount from 1% to 100% based on the purchase amount of the purchaser cannot be offered 365 days. This is because the seller should be guaranteed the production cost and the margin from the sales price. Furthermore, the open market operator needs to be given a transaction fee from the sales price as sales profits.

Meanwhile, in addition to online shopping such as an open market, a discount service would also need to be provided to customers visiting off-line stores operated by sellers, in a manner similar to online shopping. However, since the reality of an off-line store is that a number of customers often cannot help but wait in long line to pay at the cashier, there has been a need for an automatic quick discount service for customers visiting an off-line store. Nonetheless, until now, no technology has been introduced to meet the need.

### DISCLOSURE OF INVENTION

### PROBLEM TO BE SOLVED BY THE INVENTION

The present disclosure provides a system and a method for providing a real-time random discount service by using a mobile app that allows a purchaser to actively participate in a discount process during the process of receiving a real-time random discount service by using a mobile app provided in a terminal of the purchaser who visits an off-line store operated by a seller and purchases a product, thereby stimulating interests related to transactions and encouraging the purchaser to actively participate in the transactions in support of the purchaser.

The present disclosure provides a system and a method for providing a real-time random discount service by using a mobile app that provides an automatic quick discount service without a waiting time for customers visiting an off-line store in an environment in which a number of customers visiting an off-line store need to wait in line to pay at the cashier.

The present disclosure provides a system and a method for providing a real-time random discount service by using a mobile app that satisfies the demand of a purchaser who visits an off-line store operated by a seller and purchases a product, by allowing the purchaser to intervene in the process of setting a discount price when the purchaser selects and purchases one or more products, while providing a discount service that is randomly set, offering a discount from 1% to 100%, continuously for 365 days based on the payment amount paid by the purchaser.

### MEANS FOR SOLVING PROBLEM

In order to achieve the aforementioned objective, a system for providing a real-time random discount service by using a mobile app provided in a terminal of a purchaser who visits an off-line store operated by a seller according to an exemplary embodiment of the present disclosure, the system includes:
a seller terminal provided in an off-line store operated by a seller;
a purchaser terminal owned by a purchaser who authorizes payment for the purchase of a product via the seller terminal; and
a random discount service server including: a random discount app control unit for controlling to forcibly execute a random discount application provided in the purchaser terminal by pushing an app activation signal to the purchaser terminal, such that the app random discount application displays, on a display unit of the purchaser terminal, a random discount selection screen including a plurality of random discount selection buttons, wherein the random discount selection button has a winning probability inversely proportional to a discount rate, and the random discount app control unit controls to receive, from the purchaser, selection information on one of the plurality of random discount selection buttons included in the random discount selection screen; a random discount price setting unit for setting a random discount price to be offered to the purchaser, according to the winning probability and a discount price included in selection information transmitted from the purchaser terminal; and a payment settlement unit for settling the payment according to the random discount price set by the random discount price setting unit.

According to an exemplary embodiment of the present disclosure, the random discount app control unit receives payment authorization information on the purchase transaction between the purchaser and the seller from a payment server,
verifies whether the purchaser and the seller are registered as a member, and
if both of the purchaser and the seller are members, pushes the app activation signal to the purchaser terminal.

According to an exemplary embodiment of the present disclosure, a refresh button is included in the random discount request screen displayed on the display unit of the purchaser terminal, and if the refresh button is selected by the purchaser, the random discount app control unit refreshes the random discount display screen to control a plurality of random discount selection buttons reflecting a new winning probability and discount rate to be displayed on the display screen of the purchaser terminal.

According to an exemplary embodiment of the present disclosure, the payment settlement unit transmits a random discount price set by the random discount price setting unit to the purchaser terminal and the seller terminal,
synthesizes the random discount price set by the random discount price setting unit with the payment authorization information received from the payment server to thereby generate random discount price information, and
transmits the random discount price information to the payment server to request a discount for the payment of the random discount price from a payment amount authorized by the payment server.

According to an exemplary embodiment of the present disclosure, the payment settlement unit transmits a random discount price set by the random discount price setting unit to the purchaser terminal and the seller terminal,
synthesizes the random discount price set by the random discount price setting unit with the payment authorization information received from the payment server to thereby generate random discount price information, and
transmits the random discount price information to the payment server to request accumulation of points corresponding to the random discount price.

According to an exemplary embodiment of the present disclosure, a method for providing a real-time random discount service by using a mobile app provided in a terminal of a purchaser who visits an off-line store operated by a seller, the method includes:
force-executing a random discount application to push, by a random discount app control unit constituting a random discount service server, an app activation signal to a purchaser terminal owned by a purchaser who authorizes payment for a product via a seller terminal provided in an off-line store operated by a seller, to thereby forcibly execute a random discount application provided in the purchaser terminal;
displaying a random discount request screen to display, by the random discount application being executed in the purchaser terminal, a random discount request screen on a display unit of the purchaser terminal;
inputting a random discount request to receive, by the random discount application being executed in the purchaser terminal, an input of the random discount request from the purchaser;
setting a random discount price to set, by a random discount price setting unit constituting the random discount service server, a random discount price to be offered to the purchaser according to random discount request transmitted from the purchaser terminal; and
displaying a random discount price to display a set random discount price or a discount amount on a random discount display screen of the random discount application.

According to an exemplary embodiment of the present disclosure, the force-executing of an application includes:
receiving, by the random discount app control unit, payment authorization information on the purchase transaction between the purchaser and the seller from a payment server,
verifying, by the random discount app control unit, whether the purchaser and the seller are registered as a member; and
if both of the purchaser and the seller are members, pushing, by the random discount app control unit, the app activation signal to the purchaser terminal.

According to an exemplary embodiment of the present disclosure, the displaying of a random discount request screen is characterized in that a refresh button is included in the random discount request screen displayed on the display unit of the purchaser terminal,
and if the refresh button is selected by the purchaser, the random discount app control unit constituting the random discount service server refreshes the random discount display screen to control a new discount rate to be displayed on the display screen of the purchaser terminal.

According to an exemplary embodiment of the present disclosure, the method further includes:
transmitting, by the payment settlement unit, a random discount price set by the random discount price setting unit in the setting of a random discount price to the purchaser terminal and the seller terminal;
synthesizing the random discount price with the payment authorization information received from the payment server to thereby generate random discount price information; and
transmitting, by the payment settlement unit, the random discount price information to the payment server to request a discount on the random discount price from a due payment amount authorized by the payment server or request accumulation of points.

According to an exemplary embodiment of the present disclosure, a method for providing a real-time random discount service by using a mobile app provided in a terminal of a purchaser who visits an off-line store operated by a seller and purchases a product, the method includes:
force-executing a random discount application to push, by a random discount app control unit constituting a random discount service server, an app activation signal to a purchaser terminal owned by a purchaser who authorizes payment for a product via a seller terminal provided in an off-line store operated by a seller, to thereby forcibly execute a random discount application provided in the purchaser terminal;
setting a random discount price to set, by a random discount price setting unit constituting the random discount service server, a random discount price to be offered to the purchaser; and
displaying a random discount price to display a random discount price set on a random discount display screen of the random discount application or a discount price.

### EFFECT OF THE INVENTION

According to one or more exemplary embodiments of the present disclosure, a system and a method for providing a real-time random discount service by using a mobile app allows a purchaser to actively participate in a discount process during the process of receiving a real-time random discount service by using a mobile app provided in a terminal of the purchaser who visits an off-line store operated by a seller and purchases a product, thereby stimulating interests related to transactions and encouraging the purchaser to actively participate in the transactions in support of the purchaser.

According to one or more exemplary embodiments of the present disclosure, a system and a method for providing a real-time random discount service by using a mobile app provides an automatic quick discount service without a waiting time for customers visiting an off-line store in an environment in which a number of customers visiting an off-line store need to wait in line to pay at the cashier.

According to one or more exemplary embodiments of the present disclosure, a system and a method for providing a real-time random discount service by using a mobile app can satisfy the demand of a purchaser who visits an off-line store operated by a seller and purchases a product, by allowing the purchaser to intervene in the process of setting a discount price when the purchaser selects and purchases one or more products, while providing a discount service that is randomly set, offering a discount from 1% to 100%, continuously for 365 days based on the payment amount paid by the purchaser.

### BRIEF DESCRIPTION OF DRAWINGS

FIG. 1 is a view illustrating a system for providing a real-time random discount service by using a mobile app according to an exemplary embodiment of the present disclosure.
FIG. 2 is an exemplary view illustrating a purchaser terminal in a system for providing a real-time random discount service by using a mobile app according to an exemplary embodiment of the present disclosure.
FIG. 3 is an exemplary view illustrating a random discount service server in a system for providing a real-time random discount service by using a mobile app according to an exemplary embodiment of the present disclosure.
FIG. 4 is an exemplary view illustrating a random discount selection screen displayed on a display unit of a purchaser terminal in a system for providing a real-time random discount service by using a mobile app according to an exemplary embodiment of the present disclosure.
FIG. 5 is a flowchart illustrating a method for providing a real-time random discount service by using a mobile app according to an exemplary embodiment of the present disclosure.
FIG. 6 is a flowchart illustrating a process of force-executing a random discount in a method for providing a real-time random discount service by using a mobile app according to an exemplary embodiment of the present disclosure.
FIG. 7 is a flowchart illustrating an example of a process of settling a payment in a method for providing a real-time random discount service by using a mobile app according to an exemplary embodiment of the present disclosure.
FIG. 8 is a flowchart illustrating another example of a process of settling a payment in a method for providing a real-time random discount service by using a mobile app according to an exemplary embodiment of the present disclosure.

### BEST MODE(S) FOR CARRYING OUT THE INVENTION

Specific structural or functional descriptions of the exemplary embodiments of the present disclosure disclosed herein are provided only for the purpose of describing the embodiments according to the inventive concept. It may be embodied in various forms and is not limited to the embodiments described herein.

Exemplary embodiments of the present disclosure may be variously modified and have various forms, so embodiments are illustrated in the drawings and described in detail herein. However, this is not intended to limit the embodiments in accordance with the concept of the invention to the specific forms disclosed, and includes all changes, equivalents, or substitutes included in the spirit and scope of the present invention.

Terms such as first or second may be used to describe various components, but the components should not be limited by the terms. The terms are used only for the purpose of distinguishing one component from another, for example without departing from the scope of the rights according to the inventive concept, and the first component may be called a second component and similarly the second component. The component may also be referred to as a first component.

When a component is said to be "connected" or "connected" to another component, it may be directly connected to or connected to that other component, but it may be understood that other components may exist in the middle. Should be. On the other hand, when a component is said to be "directly connected" or "directly connected" to another component, it should be understood that no other component exists in the middle. Other expressions describing the relationship between components, such as "between" and "immediately between" or "neighboring to" and "directly neighboring", should be interpreted as well.

The terminology used herein is for the purpose of describing particular embodiments only and is not intended to be limiting. As used herein, the singular forms "a," "an," and "the" are intended to include the plural forms, including "at least one," unless the content clearly indicates otherwise. It will be further understood that the terms "comprises," "comprising," "includes" and/or "including," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art. It will be further understood that terms, such as those defined in commonly used dictionaries, should be interpreted as having a meaning that is consistent with their meaning in the context of the relevant art and will not be interpreted in an ideal or excessively formal sense unless clearly defined in the present specification.

Hereinafter, exemplary embodiments of the present disclosure will be described in detail with reference to the accompanied drawings to enable one of ordinary skill in the art to readily understand and reproduce the present disclosure.

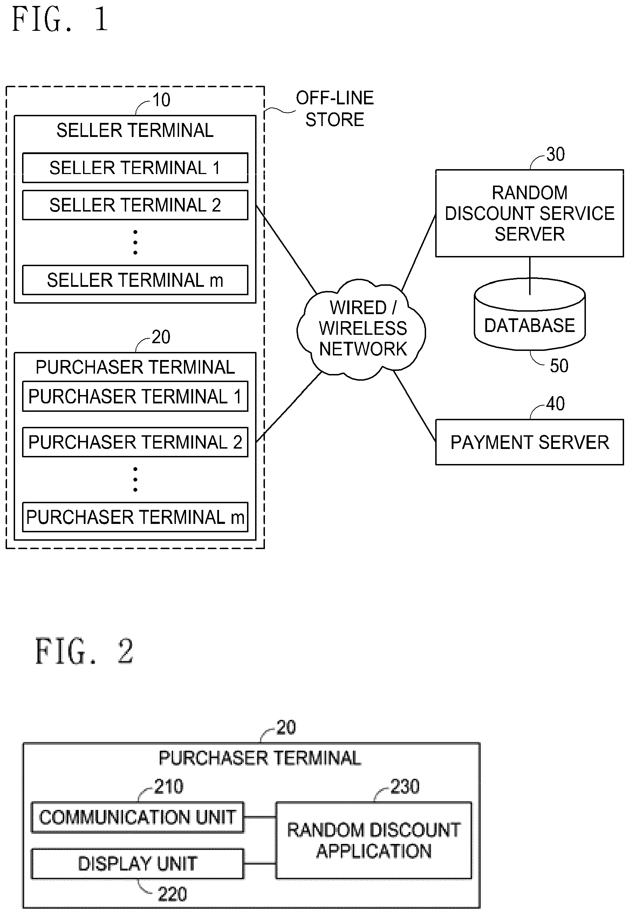

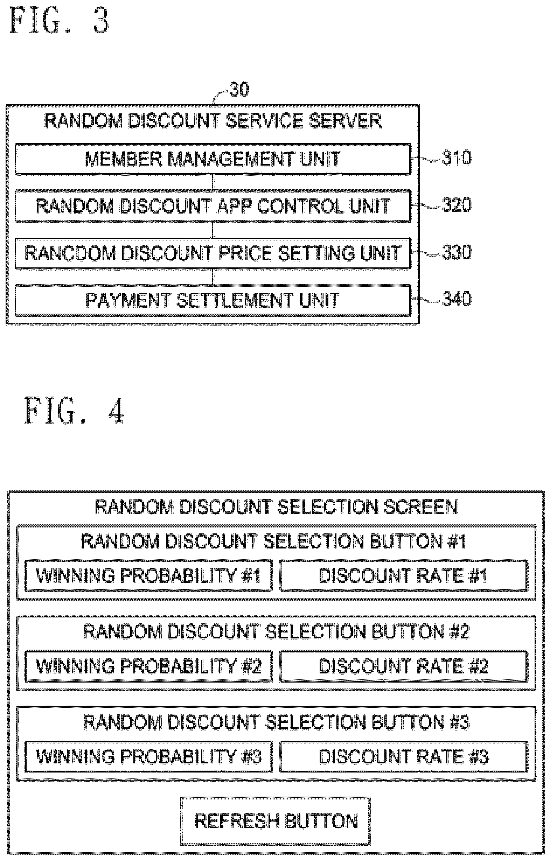

FIG. 1 is a view illustrating a system for providing a real-time random discount service by using a mobile app according to an exemplary embodiment of the present disclosure. FIG. 2 is an exemplary view illustrating a purchaser terminal in a system for providing a real-time random discount service by using a mobile app according to an exemplary embodiment of the present disclosure. FIG. 3 is an exemplary view illustrating a random discount service server in a system for providing a real-time random discount service by using a mobile app according to an exemplary embodiment of the present disclosure. FIG. 4 is an exemplary view illustrating a random discount selection screen displayed on a display unit of a purchaser terminal in a system for providing a real-time random discount service by using a mobile app according to an exemplary embodiment of the present disclosure.

Referring to FIGS. 1 to 4, a system for providing a real-time random discount service by using a mobile app according to an exemplary embodiment of the present disclosure is a system for providing a real-time random discount service by using a mobile app provided in a terminal of a purchaser who visits an off-line store operated by a seller. The system includes a seller terminal (10), a purchaser terminal (20) and a random discount service server (30).

For example, means for transaction between the purchaser and the seller may include a predetermined medium, such as a credit card embedded with a general integrated circuit (IC) chip, a check card, cash, and an app card installed in the purchaser terminal (20).

The seller terminal (10) is an element for supporting a payment for a transaction between the purchaser and the seller, and the seller terminal is provided in an off-line store operated by the seller. Specifically, the seller terminal (10) may be a terminal communicating with a point of sales (POS) system, although not limited thereto. The seller terminal (10) may also include a predetermined device supporting a payment for a transaction while being connected to a network such as the Internet. A seller who conducts a transaction of a product, *etc.,* with a purchaser who visits an off-line store operated by the seller by using the seller terminal (10) is a person who logs onto the random discount service server (30), which is an element of the system for providing a real-time random discount service by using a mobile app according to an exemplary embodiment of the present disclosure, and completes membership registration. Membership information and transaction information of the seller are stored in a database (50) and managed by a member management unit (310) constituting the random discount service server (30).

The purchaser terminal (20) is a terminal of the purchaser who visits an off-line store operated by the seller and purchases a product. Fr example, the purchaser terminal (20) may be a predetermined mobile terminal that is carried by the purchaser such as a smartphone and is connected to a wired/wireless network including the Internet while moving, and executes various information processing functions. The purchaser terminal (20) includes a random discount application (230) provided therein for providing a random discount service to a purchaser. Similarly, to the seller, the purchaser who visits an off-line store operated by the seller and conducts a transaction of a product, *etc.,* with the seller by using the purchaser terminal (20), and is a person who logs onto the random discount service server (30) and completes membership registration. Membership information and transaction information of the seller are stored in the database (50) and managed by the member management unit (310) constituting the random discount service server (30).

The random discount service server (30) is an element for providing a random discount service to a purchaser and a purchaser who are registered as members. The random discount service server (30) may include member management unit (310), a random discount app control unit (320), a random discount price setting unit (330), and a payment settlement unit (340).

The member management unit (310) performs various functions including storing the membership information and the transaction information of the seller and the purchaser in the database (50) and managing the information, *etc.*

In the occurrence of an event related to a random discount service, the random discount app control unit (320) controls to forcibly execute the random discount application (230) provided in the purchaser terminal (20) by pushing an app activation signal to the purchaser terminal (20), such that the random discount application (230) displays a random discount selection screen including a plurality of random discount selection buttons, wherein the random discount selection button has a winning probability inversely proportional to a discount rate on a display unit (220) of the purchaser terminal (20), and controls to receive, from the purchaser, selection information on one of the plurality of random discount selection buttons included in the random discount selection screen.

For example, in the occurrence of an event of receiving, from a payment server (40), payment authorization information on a purchase transaction between a purchaser and a seller, the random discount app control unit (230) verifies whether the purchaser and the seller are registered as a member with reference to the database (50). If both of the purchaser and the seller are verified as members, the random discount app control unit (230) controls to forcibly execute the random discount application (230) provided in the purchaser terminal (20) by pushing an app activation signal to the purchaser terminal (20), such that the app random discount application (230) displays a random discount screen on the display unit (220) of the purchaser terminal (20). The random discount screen includes a plurality of random discount selection buttons, each of which has a winning probability inversely proportional to a discount rate. The force-execution of the app random discount application (230) can be interpreted in various manners. For example, if the app random discount application (230) is being executed in the background at the point of authorization of payment, the background state is converted to an active state according to the app activation signal from the app random discount application (230). Meanwhile, if the app random discount application (230) is on an off state at the point of authorization of payment, the app random discount application (230) is then executed by the app activation signal from the app random discount application (230). Furthermore, if the app random discount application (230) has already been activated at the point of authorization of payment, the app random discount application (230) may serve a command instructing the app random discount application (230) to commence an operation regarding a random discount.

Referring to FIG. 4, which illustrates an exemplary view illustrating a random discount selection screen displayed on the display unit (220) of the purchaser terminal (20), the random discount selection screen displayed on the display unit (220) of the purchaser terminal (20) may include a refresh button. In the case in which the refresh button is selected by the purchaser, the random discount app control unit (320) refreshes the random discount display screen and controls a plurality of random discount selection buttons reflecting a winning probability and a discount rate that are different from the previous ones to be displayed on the display unit (220) of the purchaser terminal (20).

According to such configuration of the random discount display screen displayed on the display unit (220) of the purchaser terminal (20) based on the controlling of the random discount app control unit (320), the purchaser is supported to actively participate in the discount process, thereby stimulating interests related to transactions.

The random discount price setting unit (330) sets a random discount price to be offered to the purchaser, according to the winning probability and the discount price included in the selection information transmitted from the purchaser terminal (20).

Specifically, the random discount price setting unit (330), when receiving selection information with a predetermined winning probability and a discount rate from the purchaser terminal (20), calculates a total amount of revenues from all sellers, a total amount of commission fees paid to a random discount service operator, and a total amount of discounts offered to all purchasers at the point in time of receiving the selection information with reference to the database (50). A random discount price to be offered to a purchaser according to the winning probability and the discount rate included in the selection information can be set within the range of a difference between the total amount of discounts offered to all purchasers and the total amount of the commission fees paid to the random discount service operator. For example, this price may amount to 1% to 100% of the price paid by the purchaser.

The payment settlement unit (340) settles the payment according to the random discount price set by the random discount price setting unit (330).

By way of example, the payment settlement unit (340) may be configured to transmit the random discount price set by the random discount price setting unit (330) to the purchaser terminal (20) and the seller terminal (10), synthesize the random discount price set by the random discount price setting unit (330) with the payment authorization information received from the payment server (40) to thereby generate random discount price information, and transmit the random discount price information to the payment server (40) to request a discount for the payment of the random discount price from the original payment amount authorized by the payment server (40).

Alternatively, the payment settlement unit (340) may be configured to transmit the random discount price set by the random discount price setting unit (330) to the purchaser terminal (20) and the seller terminal (10), synthesize the random discount price set by the random discount price setting unit (330) with the payment authorization information received from the payment server (40) to thereby generate random discount price information, and transmit the random discount price information to the payment server (40) to request accumulation of points corresponding to the random discount price.

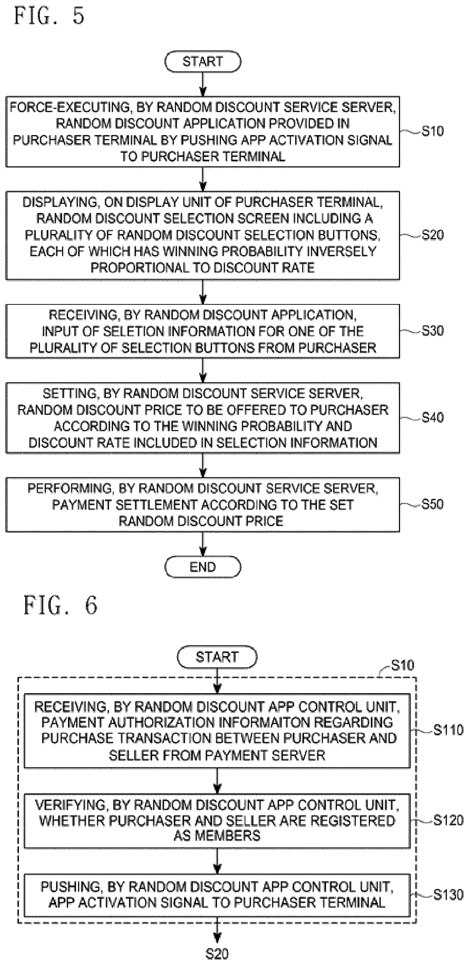

FIG. 5 is a flowchart illustrating a method for providing a real-time random discount service by using a mobile app according to an exemplary embodiment of the present disclosure. The aforesaid descriptions of the invention claiming a system can also be applied to the method invention. The method according to an exemplary embodiment of the present disclosure will be described with reference to FIGS. 1 to 4, which were used to explain the system according to an exemplary embodiment of the present disclosure.

Referring to FIGS. 1 to 5, the method for providing a real-time random discount service by using a mobile app according to an exemplary embodiment of the present disclosure is a method for providing a real-time random discount service by using a mobile app provided in a terminal of a purchaser who visits an off-line store operated by a seller and purchases a product. The method includes force-executing a random discount application (S10), displaying a random discount request screen (S20), inputting a purchaser selection (S30), setting a random discount price (S40), and settling a payment (S50).

In S10 of the force-executing of a random discount application, a random discount app control unit (320) constituting a random discount service server (30) pushes an app activation signal to a purchaser terminal (20) owned by a purchaser who authorizes payment for a product via a seller terminal (10) provided in an off-line store operated by a seller, to thereby forcibly execute a random discount application (230) provided in the purchaser terminal (20).

Referring to FIG. 6, which illustrates a process of force-executing of the random discount application (230), S10 of the force-executing of a random discount application may include, for example, S110, S120 and S130.

S110 includes receiving, from a payment server (40), payment authorization information regarding a purchase transaction between the purchaser and the seller. The payment authorization information includes the original payment price and payment method information. In addition, the payment authorization information includes commonly used credit cards, check cards, cash (which requires additional information such as identification (ID), or contact number, for verification of membership registration), as well as a card registered in the random discount application (230) provided in the purchaser terminal (20), an app card communicating with the random discount application (230) while being provided in the purchaser terminal (20), and the like.

In S120, the random discount app control unit (320) verifies whether the purchaser and the seller are registered as a member with reference to a database (50).

In S130, if both of the purchaser and the seller are verified as members, the random discount app control unit (230) controls to forcibly execute the random discount application (230) provided in the purchaser terminal (20) by pushing an app activation signal to the purchaser terminal (20), such that the app random discount application (230) displays a random discount screen on a display unit (220) of the purchaser terminal (20). In such case, the force-execution of the random discount application (230) can be modified in various manners as mentioned above.

In S20 of the displaying of a random discount request screen, the random discount application (230) that is being executed in the purchaser terminal (20) displays, on the display unit (220) of the purchaser terminal (20), a random discount screen including a plurality of random discount selection buttons, each of which has a winning probability inversely proportional to a discount rate.

Specifically, as shown in FIG. 4, which illustrates an exemplary view of the random discount selection screen displayed on the display unit (220) of the purchaser terminal (20), the random discount selection screen being displayed on the display unit (220) of the purchaser terminal (20) in S20 of the displaying of a random discount request screen includes a refresh button. If the refresh button is selected by the purchaser, the random discount app control unit (320) constituting the random discount service server (30) refreshes the random discount display screen to control a plurality of random discount selection buttons reflecting a new winning probability and discount rate to be displayed on the display unit (220) of the purchaser terminal (20).

In S20 of the displaying of a random discount request screen, according to the configuration of the random discount display screen displayed on the purchaser terminal (20), the purchaser is supported to actively participate in the discount process, thereby stimulating interests related to transactions.

In S30 of the inputting of a purchaser selection, a process in which the random discount application (230) receives an input of selection information on one of the plurality of random discount selection buttons included in the random discount selection screen from the purchaser is performed. In this process, if the purchaser is not satisfied with the winning probability and the discount rate constituting the random discount selection button, the purchaser may select a refresh button and be provided with a refreshed random discount selection screen.

In S40 of the setting a random discount price, a process in which the random discount price setting unit (330) constituting the random discount service server (30) sets a random discount price to be offered to the purchaser, according to the winning probability and the discount price included in the selection information transmitted from the purchaser terminal (20) is performed.

Specifically, in S40 of the setting a random discount price, the random discount price setting unit (330), when receiving selection information with a predetermined winning probability and a discount rate from the purchaser terminal (20), calculates a total amount of revenues from all sellers, a total amount of commission fees paid to a random discount service operator, and a total amount of discounts offered to all purchasers at the point in time of receiving the selection information with reference to the database (50). A random discount price to be offered to the purchaser according to the winning probability and the discount rate included in the selection information can be set within the range of a difference between the total amount of discounts offered to all purchasers and the total amount of the commission fees paid to the random discount service operator.

On the other hand, when setting a random discount price, the random discount price can be arbitrarily set without the process of requesting a random discount or selecting a random discount price performed by the purchaser. For example, only the random discount price may be displayed on the display unit, a pre-discount price and a discount price may be displayed together, or in addition thereto, a discount rate or a random discount price may be displayed. However, in such case, the same process in which the random discount service server (30) activates the random discount application (230) through the random discount app control unit (320) in response to the payment related signal from the purchaser terminal (20) or the seller terminal (10), and provides information to be displayed on the display unit (220) of the purchaser terminal (20) according to the random discount price set by the random discount price setting unit (330), is performed. If the purchaser is not satisfied with the set random discount price, the process in which the purchaser requests a new random discount price may be provided. In such case, the same process applies in that a total amount of revenues from all sellers, a total amount of commission fees paid to a random discount service operator, and a total amount of discounts offered to all purchasers are calculated at the point in time of receiving the payment related signal with reference to the database (50), and a random discount price to be offered to the purchaser can be set within the range of a difference between the total amount of discounts offered to all purchasers and the total amount of the commission fees paid to the random discount service operator. Furthermore, apart from the calculation obtained in real time based on a sum of the total amount of commission fees and the total amount of discounts at the time of setting the random discount price, the random discount price may be set within a predetermined range of the difference for a predetermined period of time *(e.g.,* a monthly period or past several months), and the random discount price may be set in response to a temporal or periodical fluctuation in the corresponding difference.

In S50 of the settling of a payment, a process in which the payment settlement unit (340) constituting the random discount service server (30) performs a payment settlement according to the random discount price set in the setting of a random discount price.

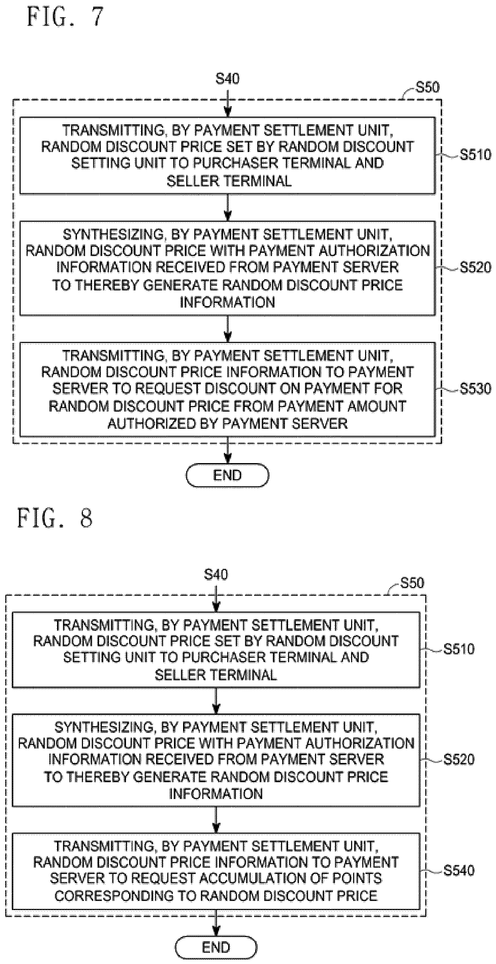

Referring to FIG. 7, which illustrates an example of S50 of the settling of a payment, S50 of the settling of a payment, may include, for example, S510, S520 and S530.

In S510, a process in which the payment settlement unit (340) transmits the random discount price set by the random discount price setting unit (330) in S40 of the setting of the random discount price to the purchaser terminal (20) and the seller terminal (10) is performed.

In S520, a process in which the payment settlement unit (340) synthesizes the random discount price with the payment authorization information received from the payment server (40) to thereby generate random discount price information is performed.

In S530, a process in which the payment settlement unit (340) transmits the random discount price information to the payment server (40) to request a discount for the payment of the random discount price from the payment amount authorized by the payment server (40) is performed.

Alternatively, referring to FIG. 8, which illustrates another example of S50 of the settling of a payment, S50 of the settling of a payment may include S510, S520 and S540.

In S510, a process in which the payment settlement unit (340) transmits the random discount price set by the random discount price setting unit (330) in S40 of the setting of the random discount price to the purchaser terminal (20) and the seller terminal (10) is performed.

In S520, a process in which the payment settlement unit (340) synthesizes the random discount price with the payment authorization information received from the payment server (40) to thereby generate random discount price information is performed.

In S540, a process in which the payment settlement unit (340) transmits the random discount price information to the payment server (40) to request accumulation of points corresponding to the random discount price is performed.

As described above, the present disclosure provides a system and a method for providing a real-time random discount service by using a mobile app that allows a purchaser to actively participate in a discount process during the process of receiving a real-time random discount service by using a mobile app provided in a terminal of the purchaser who visits an off-line store operated by a seller and purchases a product, thereby stimulating interests related to transactions and encouraging the purchaser to actively participate in the transactions in support of the purchaser.

In addition, the present disclosure provides a system and a method for providing a real-time random discount service by using a mobile app that provides an automatic quick discount service without a waiting time for customers visiting an off-line store in an environment in which a number of customers visiting an off-line store need to wait in line to pay at the cashier.

Furthermore, the present disclosure provides a system and a method for providing a real-time random discount service by using a mobile app that satisfies the demand of a purchaser who visits an off-line store operated by a seller and purchases a product, by allowing the purchaser to intervene in the process of setting a discount price when the purchaser selects and purchases one or more products, while providing a discount service that is randomly set, offering a discount from 1% to 100%, continuously for 365 days based on the payment amount paid by the purchaser.

## Claims

1. A system for providing a real-time random discount service by using a mobile app provided in a terminal of a purchaser who visits an off-line store operated by a seller, the system comprising:
a seller terminal provided in an off-line store operated by a seller;
a purchaser terminal owned by a purchaser who authorizes payment for the purchase of a product via the seller terminal; and
a random discount service server including: a random discount app control unit for controlling to forcibly execute a random discount application provided in the purchaser terminal by pushing an app activation signal to the purchaser terminal, such that the app random discount application displays a random discount price on a display unit of the purchaser terminal; a random discount price setting unit for setting a random discount price to be offered to the purchaser, according to the winning probability and a discount price included in selection information transmitted from the purchaser terminal; and a payment settlement unit for settling the payment according to the random discount price set by the random discount price setting unit.

2. The system according to Claim 1, wherein the random discount app control unit receives payment authorization information on the purchase transaction between the purchaser and the seller from a payment server,
verifies whether the purchaser and the seller are registered as a member, and
if both of the purchaser and the seller are members, pushes the app activation signal to the purchaser terminal.

3. The system according to Claim 1, wherein the display unit of the purchaser terminal displays a random discount selection screen including a plurality of random discount selection buttons, wherein the random discount selection button has a winning probability inversely proportional to a discount rate, and
the random discount app control unit controls to receive, from the purchaser, selection information on one of the plurality of random discount selection buttons included in the random discount selection screen.

4. The system according to Claim 2, wherein the payment settlement unit transmits a random discount price set by the random discount price setting unit to the purchaser terminal and the seller terminal,
synthesizes the random discount price set by the random discount price setting unit with the payment authorization information received from the payment server to thereby generate random discount price information, and
transmits the random discount price information to the payment server to request a discount for the payment of the random discount price from a payment amount authorized by the payment server.

5. The system according to Claim 2, wherein the payment settlement unit transmits a random discount price set by the random discount price setting unit to the purchaser terminal and the seller terminal,
synthesizes the random discount price set by the random discount price setting unit with the payment authorization information received from the payment server to thereby generate random discount price information, and
transmits the random discount price information to the payment server to request accumulation of points corresponding to the random discount price.

6. A method for providing a real-time random discount service by using a mobile app provided in a terminal of a purchaser who visits an off-line store operated by a seller and purchases a product, the method comprising:
force-executing a random discount application to push, by a random discount app control unit constituting a random discount service server, an app activation signal to a purchaser terminal owned by a purchaser who authorizes payment for a product via a seller terminal provided in an off-line store operated by a seller, to thereby forcibly execute a random discount application provided in the purchaser terminal;
displaying a random discount request screen to display, by the random discount application being executed in the purchaser terminal, a random discount request screen on a display unit of the purchaser terminal;
inputting a random discount request to receive, by the random discount application being executed in the purchaser terminal, an input of the random discount request from the purchaser;
setting a random discount price to set, by a random discount price setting unit constituting the random discount service server, a random discount price to be offered to the purchaser according to random discount request information transmitted from the purchaser terminal; and
displaying a random discount price to display a set random discount price or a discount amount on a random discount display screen of the random discount application.

7. The method according to Claim 6, wherein the force-executing of an app comprises:
receiving, by the random discount app control unit, payment authorization information on the purchase transaction between the purchaser and the seller from a payment server,
verifying, by the random discount app control unit, whether the purchaser and the seller are registered as a member; and
if both of the purchaser and the seller are members, pushing, by the random discount app control unit, the app activation signal to the purchaser terminal.

8. The method according to Claim 6, wherein the displaying of a random discount request screen is **characterized in that** a refresh button is included in the random discount request screen displayed on the display unit of the purchaser terminal,
and if the refresh button is selected by the purchaser, the random discount app control unit constituting the random discount service server refreshes the random discount display screen to control a new discount rate to be displayed on the display screen of the purchaser terminal.

9. The method according to Claim 7, further comprising:
transmitting, by the payment settlement unit, a random discount price set by the random discount price setting unit in the setting of a random discount price to the purchaser terminal and the seller terminal;
synthesizing the random discount price with the payment authorization information received from the payment server to thereby generate random discount price information; and
transmitting, by the payment settlement unit, the random discount price information to the payment server to request a discount on the random discount price from a due payment amount authorized by the payment server or request accumulation of points.

10. A method for providing a real-time random discount service by using a mobile app provided in a terminal of a purchaser who visits an off-line store operated by a seller and purchases a product, the method comprising:
force-executing a random discount application to push, by a random discount app control unit constituting a random discount service server, an app activation signal to a purchaser terminal owned by a purchaser who authorizes payment for a product via a seller terminal provided in an off-line store operated by a seller, to thereby forcibly execute a random discount application provided in the purchaser terminal;
setting a random discount price to set, by a random discount price setting unit constituting the random discount service server, a random discount price to be offered to the purchaser; and
displaying a random discount price to display a random discount price set on a random discount display screen of the random discount application or a discount price.
